# EUROPEAN PATENT APPLICATION

(11) **EP 4 831 254 A1**
(43) Date of publication of application: **28.10.2026**
(21) Application number: 24906046.8
(22) Date of filing: 29.11.2024
(51) Int. Cl.: C09D 177/10, H01M 50/449, H01M 50/446, H01M 50/403

(54) **DOUBLE-SIDED COATED PARA-ARAMID SEPARATOR AND PREPARATION METHOD THEREFOR**

(30) Priority: 20.12.2023 CN 202311762416
(71) Applicant: Hebei Gellec New Energy Science & Technology Co., Ltd, Handan, Hebei 057150 (CN)
(72) Inventor: YUAN, Haichao, Handan, Hebei 057150 (CN); XU, Feng, Handan, Hebei 057150 (CN); LI, Teng, Handan, Hebei 057150 (CN); SU, Bihai, Handan, Hebei 057150 (CN); WANG, Xiaojing, Handan, Hebei 057150 (CN); TIAN, Shuaiqi, Handan, Hebei 057150 (CN); LI, Qinqin, Handan, Hebei 057150 (CN)
(74) Representative: Bryn Aarflot AS
(86) International application number: PCT/CN2024/135663
(87) International publication number: WO 2025/130561

(57) **Abstract**

The present disclosure discloses a double-sided coated para-aramid separator and a preparation method therefor. The double-sided coated para-aramid separator comprises: a base film and a coating applied on the base film, wherein the coating is obtained by coating a para-aramid slurry. The para-aramid slurry comprises: a fumed powder, a ceramic powder, a first solvent, a styrene-butadiene latex solution, nano-calcium carbonate and a para-aramid polymerization liquid, wherein hydrogen chloride produced when synthesizing para-aramid from para-phenylenediamine and terephthaloyl chloride is removed from the para-aramid polymerization liquid before use, and the fumed powder is one or a mixture of several of fumed alumina, fumed silica and fumed barium titanate. In the present disclosure, a solid space occupying method is used to form pores in the coating, thereby increasing the porosity of the coating, so that the para-aramid separator has a larger porosity and a smaller air permeability value.

## Description

### TECHNICAL FIELD

The present disclosure belongs to the technical field of battery separators, and in particular relates to a double-sided coated para-aramid separator and a preparation method therefor.

### BACKGROUND

Double-sided coated para-aramid has great advantages in high temperature resistance. A very thin coating can provide good high temperature resistance. However, because the air permeability of double-sided para-aramid coating is high, the pore size problem of the coating is difficult to solve, and double-sided para-aramid coating is rarely used.

Single-sided coated para-aramid is more commonly used because the single-sided coated para-aramid separator has better air permeability. However, the cost of the coating machine for preparing single-sided coated para-aramid is extremely high. The cost of the coating machine for single-sided coated para-aramid is mainly to eliminate the stress problem of the coating on the separator. If it is directly coated on the separator, the stress of the coating will cause the separator to have serious edge warping phenomenon. The thicker the coating thickness, the more serious the edge warping phenomenon. The warped separator cannot be wound for the battery, so it must be sufficiently ironed during the coating process to eliminate the stress of the para-aramid coating. Another major disadvantage of single-sided coated para-aramid is that if the coating thickness is relatively thin, the high temperature resistance of the separator will deteriorate. The separator must reach a sufficient thickness (≥5 µm) to achieve the effect of high temperature resistance.

### SUMMARY

In view of the shortcomings of the prior art, the object of the present disclosure is to provide a para-aramid slurry.

Another object of the present disclosure is to provide a method for preparing the above-mentioned para-aramid slurry.

Another object of the present disclosure is to provide a double-sided coated para-aramid separator.

Another object of the present disclosure is to provide a method for preparing the above-mentioned double-sided coated para-aramid separator.

The purpose of the present disclosure is achieved through the following technical solutions.

A para-aramid slurry comprises: a fumed powder, a ceramic powder, a first solvent, a styrene butadiene latex solution, nano-calcium carbonate and a para-aramid polymerization liquid, where, by weight, the ratio of the fumed powder, the ceramic powder, the first solvent, the styrene butadiene latex solution, the nano-calcium carbonate and the para-aramid in the para-aramid polymerization liquid is (3-5): (15-18): (66-76): (1-2): (3-5): (2-4), hydrogen chloride produced when synthesizing para-aramid (poly(p-phenylene terephthalamide), PPTA)) from para-phenylenediamine and terephthaloyl chloride is removed from the para-aramid polymerization liquid before use, and the fumed powder is one or a mixture of several of fumed alumina, fumed silica and fumed barium titanate.

In the above technical solution, when synthesizing the para-aramid in the para-aramid polymerization liquid, a deacidifying agent is added to absorb the hydrogen chloride produced when the para-aramid is synthesized from the para-phenylenediamine and the terephthaloyl chloride.

In the above technical solution, the deacidifying agent is one or a mixture of several of pyridine, sodium hydroxide and calcium hydroxide.

In the above technical solution, the para-aramid polymerization liquid comprises: para-aramid, calcium chloride and a second solvent, the concentration of the para-aramid in the para-aramid polymerization liquid is 2-5 wt%, and the concentration of calcium chloride in the para-aramid polymerization liquid is 3-8 wt%.

In the above technical solution, the first solvent is NMP, and the water content of the first solvent is ≤0.2 wt%.

In the above technical solution, the ceramic powder is one or a mixture of several of aluminum oxide, aluminum hydroxide, boehmite and barium sulfate.

In the above technical solution, the nano calcium carbonate has a particle size of 20-80 nm.

The method for preparing the above-mentioned para-aramid slurry comprises the steps of: mixing a first solvent and a styrene-butadiene latex solution evenly to obtain a B solution, mixing nano-calcium carbonate and the B solution evenly, performing sand-milling to obtain a C solution, mixing the C solution and the second solution, stirring until uniform to obtain a para-aramid slurry, where the method for preparing the second solution comprises the steps of: mixing a fumed powder, a ceramic powder and the first solvent evenly, performing sand-milling to obtain an A solution, mixing the A solution and a para-aramid polymerization liquid, and stirring until uniform to obtain a second solution.

In the above technical solution, the fumed powder, ceramic powder and the first solvent are mixed and stirred for 40-80 minutes to achieve uniform mixing.

In the above technical solution, the C solution and the second solution are mixed and stirred for 30-40 minutes until uniform.

In the above technical solution, the first solvent and the styrene-butadiene latex solution are mixed and stirred for 5-10 minutes to achieve uniform mixing to obtain the B solution.

In the above technical solution, the nano calcium carbonate and the B solution are stirred for 40-80 minutes to achieve uniform mixing.

In the above technical solution, the A solution and the para-aramid polymerization liquid are mixed and stirred for 30-40 minutes until uniform.

In the above technical solution, the sand milling time is 20-30 minutes, and a rotational speed of the sand milling is 1000-1500 r/min.

In the above technical solution, in parts by mass, the ratio of the first solvent in the B solution to the first solvent in the A solution is (5-8): (14-18).

In the above technical solution, the para-aramid polymerization liquid has a viscosity-average molecular weight of 5000-7000.

In the above technical solution, the method for preparing the para-aramid polymerization liquid comprises the steps of: inputting a first slurry and a second slurry into a twin-screw extruder for synthesizing para-aramid, inputting a third slurry into the twin-screw extruder for conveying the synthesized para-aramid to absorb the hydrogen chloride produced when synthesizing para-aramid from para-phenylenediamine and terephthaloyl chloride, so as to obtain the para-aramid polymerization liquid, where the first slurry comprises: calcium chloride, para-phenylenediamine and a second solvent; the second slurry is a molten liquid of terephthaloyl chloride; and the third slurry is a deacidifying agent.

In the above technical solution, the deacidifying agent is one or a mixture of several of pyridine, sodium hydroxide and calcium hydroxide.

In the above technical solution, in parts by mass, the ratio of the second solvent to para-phenylenediamine is (90-96.4): (1.6-2), and in parts by mass, the ratio of calcium chloride to para-phenylenediamine is (2-8): (1.6-2).

In the above technical solution, the speed ratio of inputting the first slurry, the second slurry and the third slurry is (2-4): (0.6-0.8): (0.06-0.09).

In the above technical solution, the method for preparing the first slurry comprises the steps of: mixing calcium chloride and a second solvent, stirring until the calcium chloride is dissolved in the second solvent to obtain a first solution, cooling the first solution to 5-20 °C and then mixing with para-phenylenediamine, stirring until the para-phenylenediamine is uniformly dispersed in the first solution, so as to obtain a first slurry.

In the above technical solution, the calcium chloride is dehydrated before being mixed with the second solvent, and the dehydration method is to calcine at 400-450 °C for 3-5 h.

In the above technical solution, the second solvent is NMP, and the water content of the second solvent is ≤0.2 wt%.

In the above technical solution, the calcium chloride is dissolved in the second solvent by stirring at 75-85 °C for 4-6 h.

In the above technical solution, the para-phenylenediamine is uniformly dispersed in the first solution by stirring at 5-20 °C for 3-5 h.

In the above technical solution, the solid terephthaloyl chloride is heated at 80-95 °C until a molten liquid of the terephthaloyl chloride is formed.

In the above technical solution, the method for preparing the para-aramid polymerization liquid comprises the following steps:
Step 1: a twin-screw extruder is prepared, where the twin-screw extruder is composed of a polymerization zone, a polymerization mixing zone and a heating zone from left to right, a first feed port and a second feed port are provided on the left end of the polymerization zone, a third feed port is provided on the polymerization mixing zone, a discharge port is provided on the right end of the heating zone, the temperature of the polymerization zone is 0-5 °C, the temperature of the polymerization mixing zone is 15-20 °C, and the temperature of the heating zone is 20-30 °C;
In the step 1, the first feed port is located on the left side of the second feed port, and the zone between the third feed port and the second feed port is used for synthesizing the para-aramid (poly(p-phenylene terephthalamide)).

Step 2: At first, the first slurry is inputted into the first feed port of the twin-screw extruder to fill the twin-screw extruder with the first slurry, and then the second slurry is inputted into the second feed port in a spraying state, and when the viscosity of the slurry at the discharge port of the twin-screw extruder reaches 1300-1500 cp, the third slurry is inputted into the third feed port until the viscosity of the slurry at the discharge port of the twin-screw extruder reaches 1000-1300 cp, and a para-aramid polymerization liquid is obtained from the discharge port;
In the step 2, the slurry in the twin-screw extruder runs from the first feed port for 1-3 seconds to the second feed port, the slurry in the twin-screw extruder runs from the second feed port for 4-6 seconds to the polymerization mixing zone, the slurry in the twin-screw extruder runs from the leftmost end of the polymerization mixing zone for 5-7 seconds to the third feed port, the slurry in the twin-screw extruder runs from the third feed port for 3-5 seconds to the heating zone, and the slurry in the twin-screw extruder runs from the leftmost end of the heating zone for 4-6 seconds to the discharge port.

In the above technical solution, a rotational speed of the conveying rod in the twin-screw extruder is 20-30 r/min, and a rotational speed of the mixing rod during stirring is 20-30 r/min.

A double-sided coated para-aramid separator comprises: a base film and a coating applied on the base film, where the coating is obtained by coating a para-aramid slurry.

In the above technical solution, the base film is a wet-process PE film.

The method for preparing the double-sided coated para-aramid separator comprises the steps of: coating the para-aramid slurry on both sides of the base film, performing extraction to remove the nano calcium carbonate in the para-aramid slurry, and drying to obtain the double-sided coated para-aramid separator.

In the above technical solution, in the extraction, an acidic solution that can remove nano calcium carbonate in the para-aramid slurry is used at first, and the water is finally used.

In the above technical solution, the pH value of the acidic solution is 1-4.

In the above technical solution, the acidic solution is NMP whose pH value is adjusted by hydrogen chloride.

In the above technical solution, the coating thickness (excluding the thickness of the base film) of the para-aramid slurry on each side of the base film is 3-4 µm.

In the above technical solution, the coating is carried out under dry condition, and the dry condition is a humidity of < 5% RH.

In the above technical solution, the extraction is successively passed through acidic solutions with extractant concentrations from high to low, and finally passed through water. The acidic solutions with extractant concentrations from high to low include a first extraction liquid and a second extraction liquid. The first extraction liquid and the second extraction liquid are both mixtures of an extractant and water. The concentration of the extractant in the first extraction liquid is 70-90 wt%, and the concentration of the extractant in the second extraction liquid is 40-60 wt%. The extractant is NMP.

In the above technical solution, the drying is carried out in an oven at 40-80 °C, where the oven is equipped with a hot roller with a diameter of 600-800 mm, and the temperature of the hot roller is 60-100 °C.

In the above technical solution, there is a blower inside the drying oven, where the frequency of the blowing is 15-25 Hz.

In the above technical solution, the length of the film line in the oven is 15-30 m, and the speed passing through the hot roller is 25-50 m/min.

Compared with the prior art, the present disclosure has the following beneficial effects:
1. In the present disclosure, a solid space occupying method is used to form pores in the coating. Nano calcium carbonate is added to the para-aramid slurry. In the process of preparing the para-aramid separator, after the para-aramid slurry is coated on the base film on both sides, and then the nano calcium carbonate is decomposed into calcium ions and carbon dioxide through an acidic solution during extraction. After the nano calcium carbonate disappears, pores are generated inside the coating, thereby increasing the porosity of the coating. The generated carbon dioxide gas expands the pores in the coating, increasing the porosity of the coating, so that the para-aramid separator has a larger porosity and a smaller air permeability value.
2. A small amount of hydrogen chloride will be produced in the process of synthesizing the para-aramid from para-phenylenediamine and terephthaloyl chloride. The hydrogen chloride will react with calcium carbonate in advance, reducing the pore-forming effect of calcium carbonate in the coating. Therefore, the hydrogen chloride produced when synthesizing para-aramid from para-phenylenediamine and terephthaloyl chloride is removed from the para-aramid polymerization liquid of the present disclosure before use.
3. The present disclosure discloses a method for preparing the para-aramid polymerization liquid, where a deacidifying agent is added in the middle stage of the synthesis to absorb the hydrogen chloride produced during the synthesis of the para-aramid.
4. If the method for preparing the para-aramid polymerization liquid is directly stirred and mixed according to the corresponding temperature conditions, the production cycle is long, the efficiency is low, and the production volume is relatively small. When the polymerization amount of the para-aramid is relatively large, because the polymerization reaction is an exothermic reaction, when the amount is large, the heating rate will be too fast, which will cause a large number of molecular chains to be disconnected, and it is difficult to increase the molecular weight. In the present disclosure, the method for preparing the para-aramid polymerization liquid uses a twin-screw extruder, so continuous production can be achieved, the efficiency is relatively high, and at the same time, the heat generated during synthesis can be well controlled, the molecular weight of the para-aramid polymerization liquid can be controlled and increased, the production steps are simplified, and production efficiency is improved.
5. Since the para-aramid separator of the present disclosure is coated on both sides, there is no problem of eliminating the stress of the coating on the separator, thereby reducing the mechanical cost.

### BRIEF DESCRIPTION OF THE DRAWINGS

FIG.1 is a cross-sectional scanning electron microscope image of the double-sided coated para-aramid separator prepared in Example 1;
FIG. 2 is a cross-sectional scanning electron microscope image of the double-sided coated para-aramid separator prepared in Comparative Example 1; and
FIG. 3 is a schematic diagram of the synthesis of para-aramid polymerization liquid by a twin-screw extruder of the present disclosure.

### DETAILED DESCRIPTION OF THE EMBODIMENTS

The technical solution of the present disclosure is further described below in conjunction with specific examples.

The twin-screw extruder of the present disclosure pushes the slurry forward by rotating to achieve polymerization and conveying at the same time. A jacket is provided on the outer side of the screw, and chilled water or hot water can be introduced into the jacket to achieve temperature control of the polymerization zone, the polymerization mixing zone and the heating zone. The twin screws in the twin-screw extruder are a conveying rod and a mixing rod. The conveying rod in the twin-screw extruder is mainly used to convey the slurry, and the mixing rod mainly has the function of mixing and stirring the slurry.

In the following examples, the styrene-butadiene latex solution is purchased from BYK Chemical (Shanghai) Co., Ltd., model number LPN21954, which is obtained by modification of acrylonitrile. The styrene-butadiene latex solution uses the highly polar acrylonitrile group and the flexible polymer chain to form a water-oil dispersion interface layer on the surface of nano-calcium carbonate to prevent the nano-calcium carbonate from agglomerating.

The test method of liquid absorption rate: The separator was cut into a sample with a width of 30 mm and a length of 100 mm. The sample was weighed and recorded as the mass before soaking. The sample was soaked in the electrolyte for 30 minutes, then taken out and weighed, and was recorded as the mass after soaking. The liquid absorption rate was calculated, where liquid absorption rate = (mass after soaking - mass before soaking) / mass before soaking.

The test method of liquid retention rate: The separator was cut into a sample with a width of 30 mm and a length of 100 mm. The sample was weighed and recorded as the mass before soaking. The separator was soaked the in the electrolyte for 30 minutes, then taken out and hung for 30 minutes. The excess electrolyte on the surface was gently absorbed with a non-woven fabric. The sample was weighed and recorded as the mass of the liquid-retaining separator. The liquid retention rate was calculated, where liquid retention rate = (mass of liquid-retaining separator - mass before soaking) / mass before soaking.

The electrolyte includes lithium hexafluorophosphate and a solvent. The concentration of lithium hexafluorophosphate in the electrolyte is 6 mol/L, and the solvent is carbonate ester.

The air permeability test is defined as the time required for 100 mL of air to pass through a separator with an area of 6.45 cm² at 25 °C, 60% RH, and atmospheric pressure when a pressure of 1.21 kPa is applied to the test instrument.

Ionic conductivity: was tested at 25 °C.

In the following examples, the base film is a wet-process PE film, and the thickness of the base film is 9 µm.

In the following examples, water is deionized water.

In the following examples, the second solvent is NMP, and the water content is 0.2 wt%.

In the following examples, the first solvent is NMP, and the water content is 0.2 wt%.

In the following examples, when synthesizing para-aramid in the para-aramid polymerization liquid, a deacidifying agent is added to absorb the hydrogen chloride produced when the para-aramid is synthesized from para-phenylenediamine and terephthaloyl chloride.

In the following examples, calcium ions of calcium chloride in the para-aramid polymerization liquid occupy the positions of chlorine bonds on acyl chloride in the para-aramid, thereby preventing or reducing the generation of hydrogen bonds, and preventing the para-aramid fibers from agglomerating. If calcium chloride is not added or added in small amounts, the para-aramid polymerization liquid will directly have an extremely high viscosity and cannot be used.

### Example 1

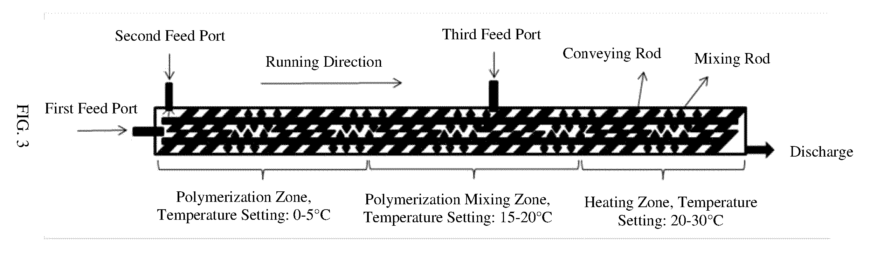

A method for preparing a para-aramid polymerization liquid comprises the following steps:
Step 1: A twin-screw extruder was prepared. As shown in FIG. 3, the twin-screw extruder is composed of a polymerization zone, a polymerization mixing zone and a heating zone from left to right, a first feed port and a second feed port are provided at the left end of the polymerization zone (the first feed port is located on the left side of the second feed port), a third feed port is provided on the polymerization mixing zone, the third feed port is located at 1/2 position of the polymerization mixing zone, and the zone between the third feed port and the second feed port is used to synthesize poly(p-phenylene terephthalamide) (PPTA), a discharge port is provided at the right end of the heating zone, the temperature of the polymerization zone is 0 °C, the temperature of the polymerization mixing zone is 15 °C, and the temperature of the heating zone is 20 °C;
Step 2: At first, a first slurry was inputted into the first feed port of the twin-screw extruder to fill the twin-screw extruder with the first slurry, and then a second slurry was inputted into the second feed port in a spraying state, and when the viscosity of the slurry at the discharge port of the twin-screw extruder reached 1300 cp, a third slurry was inputted into the third feed port until the viscosity of the slurry at the discharge port of the twin-screw extruder reached 1000 cp, a para-aramid polymerization liquid with a viscosity-average molecular weight of 5000 was obtained from the discharge port, where the speed ratio of the inputted first slurry, the inputted second slurry and the inputted third slurry was 2:0.6:0.06, and the flow rate of the inputted first slurry was 2 L/min, the slurry in the twin-screw extruder ran from the first feed port for 3 seconds to the second feed port, the slurry in the twin-screw extruder ran from the second feed port for 6 seconds to the polymerization mixing zone, the slurry in the twin-screw extruder ran from the leftmost end of the polymerization mixing zone for 7 seconds to the third feed port, the slurry in the twin-screw extruder ran from the third feed port for 5 seconds to the heating zone, the slurry in the twin-screw extruder ran from the leftmost end of the heating zone for 6 seconds to the discharge port, a rotational speed of the conveying rod in the twin-screw extruder was 20 r/min, and a rotational speed of the mixing rod during stirring was 20 r/min.

The method for preparing the first slurry comprises the steps of: mixing calcium chloride and a second solvent, stirring at 80°C for 6 hours until the calcium chloride is dissolved in the second solvent to obtain a first solution, cooling the first solution to 5 °C and then mixing it with para-phenylenediamine, stirring at 5 °C for 3 hours until the para-phenylenediamine is uniformly dispersed in the first solution to obtain a first slurry, where, in parts by mass, the ratio of the second solvent, calcium chloride and para-phenylenediamine was 90:2:1.6, and the calcium chloride was dehydrated before being mixed with the second solvent, and the dehydration method was to calcine in a muffle furnace at 420 °C for 4 hours;
The second slurry was a molten liquid of terephthaloyl chloride, which was prepared by heating the solid terephthaloyl chloride in a tank at 80 °C until the molten liquid of terephthaloyl chloride was formed;
The third slurry was a deacidifying agent (pyridine), which was used to absorb the hydrogen chloride produced during the synthesis of para-aramid from para-phenylenediamine and terephthaloyl chloride so as to prevent the hydrogen chloride from reacting with nano-calcium carbonate in advance and reduce the pore-forming effect of nano-calcium carbonate in the coating.

The concentration of para-aramid in the para-aramid polymerization liquid was 2 wt%, and the concentration of calcium chloride in the para-aramid polymerization liquid was 3 wt%.

The method for preparing a para-aramid slurry comprises the steps of: mixing a first solvent and a styrene-butadiene latex solution, stirring for 5 minutes until uniform to obtain a B solution, mixing nano calcium carbonate (the particle size of the nano calcium carbonate was 20-40 nm) and the B solution, stirring for 40 minutes until uniform, and performing sand milling for 20 minutes at a speed of 1000 r/min in a sand mill to obtain a C solution, mixing the C solution and a second solution, and stirring for 30 minutes until uniform to obtain the para-aramid slurry, where the method for preparing the second solution comprises the steps of: mixing a fumed powder, a ceramic powder and a first solvent, stirring for 40 minutes until uniform, and performing sand milling for 20 minutes at a speed of 1000 r/min in a sand mill to obtain an A solution, mixing the A solution and a para-aramid polymerization liquid, and stirring for 30 minutes until uniform to obtain a second solution, where the fumed powder was gas phase silica, the ceramic powder was boehmite, and in parts by mass, the ratio of the fumed powder, the ceramic powder, all the first solvent in the para-aramid slurry, the styrene-butadiene latex solution, the nano-calcium carbonate and the para-aramid in the para-aramid polymerization liquid was 3:15:76:1:3:2, where in parts by mass, the ratio of the first solvent in the B solution to the first solvent in the A solution was 5:14.

The method for preparing a double-sided coated para-aramid separator comprises the steps of: coating the para-aramid slurry on both sides of a base film, where the coating thickness of the para-aramid slurry on each side of the base film was 3 µm; performing extraction to remove nano calcium carbonate in the para-aramid slurry, and drying to obtain a coating on the base film, so as to obtain a double-sided coated para-aramid separator, where the coating was performed under dry condition to prevent the slurry from contacting moisture in the air and causing deterioration, and the drying condition was a humidity of 4% RH; the extraction was successively passed through acidic solutions with extractant concentrations from high to low, and finally passed through water, the water was used to wash out the calcium ions decomposed by the nano-calcium carbonate, the acidic solutions with extractant concentrations from high to low were sequentially a first extraction liquid and a second extraction liquid. Both the first extraction liquid and the second extraction liquid were mixtures of an extractant and water. During the extraction, the separator successively passed through the first extraction pool, the second extraction pool,..., and the fifth extraction pool. The first extraction liquid and the second extraction liquid were placed in the first extraction pool. A partition was provided in the middle of the first extraction pool to divide the first extraction pool into a first zone and a second zone. The first extraction liquid was located in the first zone, the second extraction liquid was located in the second zone, the water was located in the second extraction pool to the fifth extraction pool respectively, the concentration of the extractant in the first extraction liquid was 90 wt%, the concentration of the extractant in the second extraction liquid was 60 wt%, the extractant was NMP, and the pH values of the first extraction liquid and the second extraction liquid were adjusted to 1 by hydrogen chloride. The hydrogen chloride was used to decompose nano-calcium carbonate into calcium ions and carbon dioxide; the drying was carried out in an oven at 40 °C, and the oven was equipped with 4 hot rollers with a diameter of 750 mm. The heating temperature of the hot rollers was 60 °C. There was a blower inside the drying oven, where the frequency of the blowing was 20 Hz, the length of the film line in the oven was 15 m, and the speed passing through the hot rollers was 25 m/min.

### Example 2

A method for preparing a para-aramid polymerization liquid comprises the following steps:
Step 1: A twin-screw extruder was prepared. As shown in FIG. 3, the twin-screw extruder is composed of a polymerization zone, a polymerization mixing zone and a heating zone from left to right, a first feed port and a second feed port are provided at the left end of the polymerization zone (the first feed port is located on the left side of the second feed port), a third feed port is provided on the polymerization mixing zone, the third feed port is located at 1/2 position of the polymerization mixing zone, and the zone between the third feed port and the second feed port is used to synthesize poly(p-phenylene terephthalamide) (PPTA), a discharge port is provided at the right end of the heating zone, the temperature of the polymerization zone is 3 °C, the temperature of the polymerization mixing zone is 18 °C, and the temperature of the heating zone is 25 °C;
Step 2 : At first, the first slurry was inputted into the first feed port of the twin-screw extruder to fill the twin-screw extruder with the first slurry, then the second slurry was inputted into the second feed port in a spraying state, and when the viscosity of the slurry at the discharge port of the twin-screw extruder reached 1300 cp, the third slurry was inputted into the third feed port until the viscosity of the slurry at the discharge port of the twin-screw extruder reached 1200 cp, and a para-aramid polymerization liquid with a viscosity-average molecular weight of 6000 was obtained from the discharge port, where the speed ratio of the inputted first slurry, the inputted second slurry and the inputted third slurry was 3:0.7:0.08, and the flow rate of the inputted first slurry was 3 L/min, the slurry in the twin-screw extruder ran from the first feed port for 2 seconds to the second feed port, the slurry in the twin-screw extruder ran from the second feed port for 5 seconds to the polymerization mixing zone, the slurry in the twin-screw extruder ran from the leftmost end of the polymerization mixing zone for 6 seconds to the third feed port, the slurry in the twin-screw extruder ran from the third feed port for 4 seconds to the heating zone, the slurry in the twin-screw extruder ran from the leftmost end of the heating zone for 5 seconds to the discharge port, a rotational speed of the conveying rod in the twin-screw extruder was 25 r/min, and a rotational speed of the mixing rod during stirring was 25 r/min.

The method for preparing the first slurry comprises the steps of: mixing calcium chloride and a second solvent, stirring at 80 °C for 6 hours until the calcium chloride is dissolved in the second solvent to obtain a first solution, cooling the first solution to 10 °C, and mixing it with para-phenylenediamine and stirring at 10 °C for 3 hours until the para-phenylenediamine is uniformly dispersed in the first solution to obtain a first slurry, where, in parts by mass, the ratio of the second solvent, the calcium chloride and the para-phenylenediamine was 93.2: 5:1.8, and the calcium chloride was dehydrated before being mixed with the second solvent, and the dehydration method was to calcine in a muffle furnace at 420 °C for 4 hours;
The second slurry was a molten liquid of terephthaloyl chloride, which was prepared by heating the solid terephthaloyl chloride in a tank at 90 °C until the molten liquid of terephthaloyl chloride was formed;
The third slurry was deacidifying agent (sodium hydroxide), which was used to absorb the hydrogen chloride produced during the synthesis of para-aramid from para-phenylenediamine and terephthaloyl chloride, so as to prevent the hydrogen chloride from reacting with nano-calcium carbonate in advance and reduce the pore-forming effect of nano-calcium carbonate in the coating.

The concentration of para-aramid in the para-aramid polymerization liquid was 3 wt%, and the concentration of calcium chloride in the para-aramid polymerization liquid was 5 wt%.

The method for preparing a para-aramid slurry comprises the steps of: mixing a first solvent and a styrene-butadiene latex solution, stirring for 8 minutes until uniform to obtain a B solution, mixing nano calcium carbonate (the particle size of the nano calcium carbonate was 40-60 nm) and the B solution, stirring for 60 minutes until uniform, and performing sand milling for 25 minutes at a speed of 1300 r/min in a sand mill to obtain a C solution, mixing the C solution and a second solution, and stirring for 35 minutes until uniform to obtain the para-aramid slurry, where the method for preparing the second solution comprises the steps of: mixing a fumed powder, a ceramic powder and a first solvent, stirring for 60 minutes until uniform, and performing sand milling for 25 minutes at a speed of 1300 r/min in a sand mill to obtain solution A, mixing solution A and para-aramid polymerization liquid, and stirring for 35 minutes until uniform to obtain a second solution, where the fumed powder was fumed alumina, the ceramic powder was alumium oxide, and in parts by mass, the ratio of fumed powder, ceramic powder, all first solvents in para-aramid slurry, styrene-butadiene latex solution, nano-calcium carbonate and para-aramid in para-aramid polymerization liquid was 4:16:71:2:4:3, where in parts by mass, the ratio of the first solvent in solution B to the first solvent in solution A is 7:15.

The method for preparing a double-sided coated para-aramid separator comprises the steps of: coating a para-aramid slurry on both sides of a base film, where the coating thickness of the para-aramid slurry on each side of the base film was 3 µm; performing extraction to remove nano calcium carbonate in the para-aramid slurry, and drying to obtain a coating on the base film so as to obtain a double-sided coated para-aramid separator, where the coating was performed under dry condition to prevent the slurry from contacting moisture in the air and causing deterioration, and the drying condition was a humidity of 3% RH; the extraction was sequentially subjected to acidic solutions with extractant concentrations from high to low, and finally subjected to water, where the water was used to remove calcium ions decomposed by the nano calcium carbonate. The acidic solutions with extractant concentrations from high to low were sequentially the first extraction liquid and the second extraction liquid. Both the first extraction liquid and the second extraction liquid were mixtures of an extractant and water. During the extraction, the separator passed through the first extraction pool, the second extraction pool,..., and the fifth extraction pool in turn. The first extraction liquid and the second extraction liquid were placed in the first extraction pool. A partition was provided in the middle of the first extraction pool to divide the first extraction pool into a first zone and a second zone. The first extraction liquid was located in the first zone, the second extraction liquid was located in the second zone, and water was located in the second extraction pool to the fifth extraction pool. The concentration of the extractant in the first extraction liquid was 80 wt%, the concentration of the extractant in the second extraction liquid was 50 wt%, the extractant was NMP, the pH values of the first extraction liquid and the second extraction liquid were adjusted to 2 by hydrogen chloride, and the hydrogen chloride was used to decompose the nano-calcium carbonate into calcium ions and carbon dioxide; the drying was carried out in an oven at 60 °C, and the oven was equipped with 4 hot rollers with a diameter of 750 mm, the heating temperature of the hot rollers was 80°C, and there was a blower inside the drying oven, where the frequency of the blowing was 20 Hz, the length of the film line in the oven was 25 m, and the speed passing through the hot rollers was 35 m/min.

### Example 3

A method for preparing a para-aramid polymerization liquid comprises the following steps:
Step 1: A twin-screw extruder was prepared. As shown in FIG. 3, the twin-screw extruder is composed of a polymerization zone, a polymerization mixing zone and a heating zone from left to right, a first feed port and a second feed port are provided at the left end of the polymerization zone (the first feed port is located on the left side of the second feed port), a third feed port is provided on the polymerization mixing zone, the third feed port is located at 1/2 position of the polymerization mixing zone, and the zone between the third feed port and the second feed port is used to synthesize poly(p-phenylene terephthalamide) (PPTA), a discharge port is provided at the right end of the heating zone, the temperature of the polymerization zone is 5 °C, the temperature of the polymerization mixing zone is 20 °C, and the temperature of the heating zone is 30 °C;
Step 2: At first, the first slurry was inputted into the first feed port of the twin-screw extruder to fill the twin-screw extruder with the first slurry, then the second slurry was inputted into the second feed port in a spraying state, when the viscosity of the slurry at the discharge port of the twin-screw extruder reached 1500 cp, the third slurry was inputted into the third feed port until the viscosity of the slurry at the discharge port of the twin-screw extruder reached 1300 cp, and a para-aramid polymerization liquid with a viscosity-average molecular weight of 7000 was obtained from the discharge port, where the speed ratio of the inputted first slurry, the inputted second slurry and the inputted third slurry was 4: 0.8:0.09, and the flow rate of the inputted first slurry was 4 L/min, the slurry in the twin-screw extruder ran from the first feed port for 1 second to the second feed port, the slurry in the twin-screw extruder ran from the second feed port for 4 seconds to the polymerization mixing zone, the slurry in the twin-screw extruder ran from the leftmost end of the polymerization mixing zone for 5 seconds to the third feed port, the slurry in the twin-screw extruder ran from the third feed port for 3 seconds to the heating zone, the slurry in the twin-screw extruder ran from the leftmost end of the heating zone for 4 seconds to the discharge port, a rotational speed of the conveying rod in the twin-screw extruder was 30 r/min, and a rotational speed of the mixing rod during stirring was 30 r/min.

The method for preparing the first slurry comprises the steps of: mixing calcium chloride and a second solvent, stirring at 80 °C for 6 hours until the calcium chloride was dissolved in the second solvent to obtain a first solution, cooling the first solution to 15 °C and mixing it with para-phenylenediamine, stirring at 15 °C for 3 hours until the para-phenylenediamine was uniformly dispersed in the first solution to obtain a first slurry, where, in parts by mass, the ratio of the second solvent, calcium chloride and para-phenylenediamine was 96.4:8:2, and the calcium chloride was dehydrated before being mixed with the second solvent, and the dehydration method was to calcine in a muffle furnace at 420° C for 4 hours;
The second slurry was a molten liquid of terephthaloyl chloride, which was prepared by heating the solid terephthaloyl chloride in a tank at 95 °C until the molten liquid of terephthaloyl chloride was formed;
The third slurry was a deacidifying agent (pyridine), which was used to absorb the hydrogen chloride produced during the synthesis of para-aramid from para-phenylenediamine and terephthaloyl chloride, so as to prevent the hydrogen chloride from reacting with nano-calcium carbonate in advance and reduce the pore-forming effect of nano-calcium carbonate in the coating.

The concentration of para-aramid in the para-aramid polymerization liquid was 5 wt%, and the concentration of calcium chloride in the para-aramid polymerization liquid was 8 wt%.

The method for preparing a para-aramid slurry comprises the steps of: mixing a first solvent and a styrene-butadiene latex solution, and stirring for 10 minutes until uniform to obtain a B solution, mixing nano calcium carbonate (the particle size of the nano calcium carbonate was 60-80 nm ) and the B solution, stirring for 80 minutes until uniform, performing sand milling for 30 minutes at a speed of 1500 r/min in a sand mill to obtain a C solution, mixing the C solution and the second solution, and stirring for 40 minutes until uniform to obtain the para-aramid slurry, where the method for preparing the second solution comprises the steps of: mixing a fumed powder, a ceramic powder and the first solvent, stirring for 80 minutes until uniform, performing sand milling for 30 minutes at a speed of 1500 r/min in a sand mill to obtain solution A, mixing solution A and para-aramid polymerization liquid, and stirring for 40 minutes until uniform to obtain the second solution, where the fumed powder was fumed barium titanate, the ceramic powder was aluminum hydroxide, and in parts by mass, the ratio of fumed powder, ceramic powder, all first solvents in para-aramid slurry, styrene-butadiene latex solution, nano-calcium carbonate and para-aramid in para-aramid polymerization liquid was 5:18:66:2:5:4, where, in parts by mass, the ratio of the first solvent in solution B to the first solvent in solution A was 8:18.

The method for preparing a double-sided coated para-aramid separator comprises the steps of: coating a para-aramid slurry on both sides of a base film, where the coating thickness of the para-aramid slurry on each side of the base film was 3 µm, performing extraction to remove nano calcium carbonate in the para-aramid slurry, and drying to obtain a coating on the base film, so as to obtain a double-sided coated para-aramid separator, where the coating was performed under dry condition to prevent the slurry from contacting moisture in the air and causing deterioration, and the drying condition was a humidity of 2% RH; the extraction was sequentially subjected to acidic solutions with extractant concentrations from high to low, and finally subjected to water, where the water was used to remove calcium ions decomposed by the nano calcium carbonate. The acidic solutions with extractant concentrations from high to low were sequentially a first extraction liquid and a second extraction liquid. Both the first extraction liquid and the second extraction liquid were mixtures of an extractant and water. During the extraction, the separator passed through the first extraction pool, the second extraction pool,..., and the fifth extraction pool in sequence. The first extraction liquid and the second extraction liquid were placed in the first extraction pool. A partition was provided in the middle of the first extraction pool to divide the first extraction pool into a first zone and a second zone. The first extraction liquid was located in the first zone, the second extraction liquid was located in the second zone, and water was located in the second extraction pool to the fifth extraction pool. The concentration of the extractant in the first extraction liquid was 70 wt%, the concentration of the extractant in the second extraction liquid was 40 wt%, the extractant was NMP, the pH values of the first extraction liquid and the second extraction liquid were adjusted to 4 by hydrogen chloride. The hydrogen chloride was used to decompose the nano-calcium carbonate into calcium ions and carbon dioxide; the drying was carried out in an oven at 80°C, and the oven was equipped with 4 hot rollers with a diameter of 750 mm, the heating temperature of the hot rollers was 100°C, and there was a blower inside the drying oven, where the frequency of the blowing was 20 Hz, the length of the film line in the oven was 30 m, and the speed passing through the hot rollers was 50 m/min.

### Comparative Example 1

A method for preparing a double-sided coated para-aramid separator is basically the same as the "method for preparing a double-sided coated para-aramid separator" in Example 1, with the only difference being that in this comparative example, no nano-calcium carbonate was added into the para-aramid slurry.

### Comparative Example 2

A method for preparing a single-sided coated para-aramid separator is basically the same as the "method for preparing a double-sided coated para-aramid separator" in Example 1, with the only difference being that in this comparative example, the para-aramid slurry was coated on one side of the base film, and the coating thickness of the para-aramid slurry on one side of the base film was 5 µm.

Table 1 shows a basic data comparison of the double-sided coated para-aramid separators prepared in Examples 1 to 3, the double-sided coated para-aramid separator prepared in Comparative Example 1, and the single-sided coated para-aramid separator prepared in Comparative Example 2.

**Table 1**

| Examples and Comparative Examples | Thickness of para-aramid separator (µm) | Air permeability value (Sec/100mL) | 200°C*1h Shrinkage (%) | |
|---|---|---|---|---|
| | | | MD (Machine direction) | TD (Transverse direction) |
| Example 1 | 13.2 | 125 | 1.2 | 0.8 |
| Example 2 | 13.3 | 123 | 1.5 | 1.0 |
| Example 3 | 13.3 | 129 | 1.3 | 1.1 |
| Comparative Example 1 | 13.6 | 256 | 1.3 | 1.2 |
| Comparative Example 2 | 13.8 | 108 | 15.3 | 12.3 |

It can be clearly seen from the test data in Table 1 that: the air permeability values of the double-sided coated para-aramid separators (nano calcium carbonate is added into the para-aramid slurry) prepared in Examples 1 to 3 are reduced to below 130 s/100mL, while the air permeability value of the double-sided coated para-aramid separator (no nano calcium carbonate is added into the para-aramid slurry) prepared in Comparative Example 1 is directly increased to 256 s/100mL, and the air permeability value of the single-sided coated para-aramid separator prepared in Comparative Example 2 is lower than that of Comparative Example 1, but in an environment of 200 °C for 1h, the shrinkage rate of the single-sided coated para-aramid separator reaches about 15.3%, and the high temperature resistance is relatively poor. The air permeability value can prove the pore-forming effect of the separator. The smaller the air permeability value, the higher the porosity of the coating.

Table 2 shows the ionic conductivity of the double-sided coated para-aramid separators prepared in Examples 1 to 3, the double-sided coated para-aramid separator prepared in Comparative Example 1, and the single-sided coated para-aramid separator prepared in Comparative Example 2.

**Table 2**

| Examples and Comparative Examples | Impedance (Ω) | Ionic conductivity (mS/cm) |
|---|---|---|
| Example 1 | 0.03 | 1.7 |
| Example 2 | 0.02 | 1.8 |
| Example 3 | 0.02 | 1.7 |
| Comparative Example 1 | 0.08 | 0.7 |
| Comparative Example 2 | 0.07 | 1.2 |

Ionic conductivity mainly tests the rate of ions shuttle through the separator. The detection of ionic conductivity can test the efficiency of the separator in shuttling lithium ions in the battery. As can be seen from Table 2, the addition of nano-calcium carbonate (solid pore-forming agent) can significantly increase the ionic conductivity of the separator. This is because the increase in porosity can increase the ion shuttle channel and thus increase the ionic conductivity of the separator.

Table 3 shows the liquid absorption rate and liquid retention rate of the double-sided coated para-aramid separators prepared in Examples 1 to 3, the double-sided coated para-aramid separator prepared in Comparative Example 1, and the single-sided coated para-aramid separator prepared in Comparative Example 2.

**Table 3**

| Examples and Comparative Examples | Liquid absorption rate | Liquid retention rate |
|---|---|---|
| Example 1 | 85.3 % | 80.2 % |
| Example 2 | 83.5 % | 79.2 % |
| Example 3 | 80.1 % | 78.2 % |
| Comparative Example 1 | 58.3 % | 52.3 % |
| Comparative Example 2 | 48.5 % | 45.3 % |

It can be seen from the data in Table 3 that the double-sided coated para-aramid separators prepared in Examples 1 to 3 have greater liquid absorption rate and liquid retention rate and better infiltration.

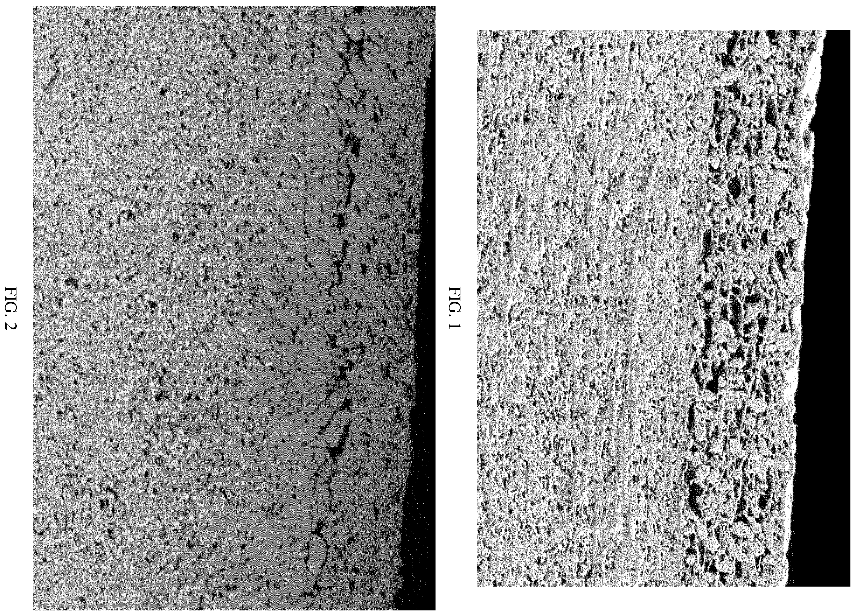

FIG. 1 is a cross-sectional scanning electron microscope image of the double-sided coated para-aramid separator prepared in Example 1. It can be seen from FIG. 1 that: calcium carbonate is added into the para-aramid slurry, so that the porosity of the coating is significantly increased and the aramid fibers are relatively uniform;

FIG. 2 is a cross-sectional scanning electron microscope image of the double-sided coated para-aramid separator prepared in Comparative Example 1. It can be seen from FIG. 2 that: no calcium carbonate is added into the para-aramid slurry, so that the aramid fibers in the coating are closely attached together and the coating has a lower porosity.

The present disclosure has been exemplarily described above. It should be noted that, without departing from the core of the present application, any simple deformation, modification or equivalent replacement that can be made by those skilled in the art without creative efforts shall fall within the protection scope of the present disclosure.

## Claims

1. A para-aramid slurry, comprising: a fumed powder, a ceramic powder, a first solvent, a styrene butadiene latex solution, nano-calcium carbonate and a para-aramid polymerization liquid, where, by weight, the ratio of the fumed powder, the ceramic powder, the first solvent, the styrene butadiene latex solution, the nano-calcium carbonate and para-aramid in the para-aramid polymerization liquid is (3-5) : (15-18) : (66-76) : (1-2) : (3-5) : (2-4), hydrogen chloride produced when synthesizing para-aramid from para-phenylenediamine and terephthaloyl chloride is removed from the para-aramid polymerization liquid before use, and the fumed powder is one or a mixture of several of fumed alumina, fumed silica and fumed barium titanate.

2. The para-aramid slurry according to claim 1, wherein when synthesizing para-aramid in the para-aramid polymerization liquid, a deacidifying agent is added to absorb the hydrogen chloride produced when the para-aramid is synthesized from the para-phenylenediamine and the terephthaloyl chloride.

3. The para-aramid slurry according to claim 2, wherein the deacidifying agent is one or a mixture of several of pyridine, sodium hydroxide and calcium hydroxide.

4. The para-aramid slurry according to claim 1, wherein the ceramic powder is one or a mixture of several of aluminum oxide, aluminum hydroxide, boehmite and barium sulfate.

5. The para-aramid slurry according to claim 1, wherein the para-aramid polymerization liquid comprises: para-aramid, calcium chloride and a second solvent, the concentration of para-aramid in the para-aramid polymerization liquid is 2-5 wt%, the concentration of calcium chloride in the para-aramid polymerization liquid is 3-8 wt%, the second solvent is NMP, and the water content of the second solvent is ≤0.2 wt%.

6. The para-aramid slurry according to claim 1, wherein the nano calcium carbonate has a particle size of 20-80 nm.

7. The para-aramid slurry according to claim 1, wherein the first solvent is NMP, and the water content of the first solvent is ≤0.2 wt%.

8. A method for preparing the para-aramid slurry according to claim 1, comprising the steps of: mixing the first solvent and the styrene-butadiene latex solution evenly to obtain a B solution; mixing the nano-calcium carbonate and the B solution evenly and performing sand-milling to obtain a C solution; mixing the C solution and the second solution and stirring until uniform to obtain the para-aramid slurry, wherein the method for preparing the second solution is: mixing the fumed powder, the ceramic powder and the first solvent evenly, and performing sand-milling to obtain an A solution, mixing the A solution and the para-aramid polymerization liquid, and stirring until uniform to obtain the second solution.

9. A double-sided coated para-aramid separator, wherein the separator comprises: a base film and a coating applied on the base film, the coating is obtained by coating the para-aramid slurry according to claim 1.

10. The para-aramid separator according to claim 9, wherein the method for preparing the double-sided coated para-aramid separator comprises the steps of: coating the para-aramid slurry on both sides of the base film, performing extraction to remove nano-calcium carbonate in the para-aramid slurry, and drying to obtain the double-sided coated para-aramid separator.
